# EUROPEAN PATENT APPLICATION

(11) **EP 2 485 562 A1**
(43) Date of publication of application: **08.08.2012**
(21) Application number: 09850058.0
(22) Date of filing: 30.09.2009
(51) Int. Cl.: H04W 88/08, H04L 12/56

(54) **MOBILE COMMUNICATION SYSTEM, WIRELESS DEVICE AND WIRELESS DEVICE CONTROLLER**

(71) Applicant: Fujitsu Limited, Kawasaki-shi, Kanagawa 211-8588 (JP)
(72) Inventor: MIYAMOTO, Takefumi, Kawasaki-shi Kanagawa 211-8588 (JP); FUJISAKI, Fumio, Kawasaki-shi Kanagawa 211-8588 (JP)
(74) Representative: Stebbing, Timothy Charles
(86) International application number: PCT/JP2009/067077
(87) International publication number: WO 2011/039867

(57) **Abstract**

A mobile communication system includes a cell that is constituted by connecting a wireless apparatus control apparatus and a wireless apparatus that are included in a wireless base station by using a predetermined interface. A first wireless apparatus that constitutes a first cell and a second wireless apparatus that constitutes a second cell different from the first cell and that is adjacent to the first wireless apparatus are connected by using the predetermined interface in order to perform data communication.

## Description

### FIELD

The embodiments discussed herein relate to a mobile communication system in which there is a cell formed by connecting plural wireless apparatuses to a wireless apparatus control apparatus, a wireless apparatus, and a wireless apparatus control apparatus.

### BACKGROUND

A wireless base station apparatus is often separated into a wireless apparatus control unit (REC: Radio Equipment Controller) and one or more wireless apparatuses (RE: Radio Equipment). As an interface between the separated wireless apparatus control unit and wireless apparatuses, a CPRI (Common Public Radio Interface) may be used (see Non-Patent Document 1).

In such a separated structure, by adjusting the distance between the wireless apparatus control unit and the wireless apparatus and locating the wireless apparatuses including antenna units in a distributed manner, radio reachability improvements can be realized. Also, it is aimed to reduce weight by separating the wireless apparatus control unit and the wireless apparatus and cutting the wireless apparatuses, with their antenna units installed on poles and the like, away from the wireless apparatus control unit. Under this utilization assumption, a transfer destination is closed within a cell constituted by the wireless apparatus control unit that performs a base band processing.

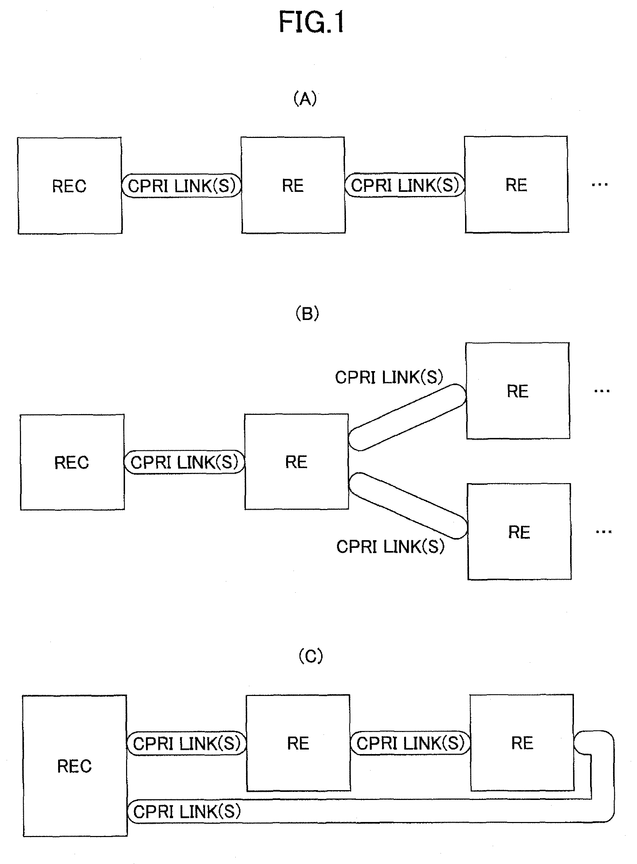

According to the CPRI, the wireless apparatus control unit and the wireless apparatus have a 1:1 or 1:N relationship, as illustrated in FIGS. 1A, 1B, and 1C, where a network that is closed on the side of the wireless apparatus from a single wireless apparatus control unit is defined. The CPRI defines various modes of connection between the wireless apparatuses, including a chain topology illustrated in FIG. 1A, a tree topology illustrated in FIG. 1B, and a ring topology illustrated in FIG. 1C. However, all of these topologies define modes of connection with respect to the single wireless apparatus control unit and do not define a mode of connection across the cell of the wireless apparatus control unit.

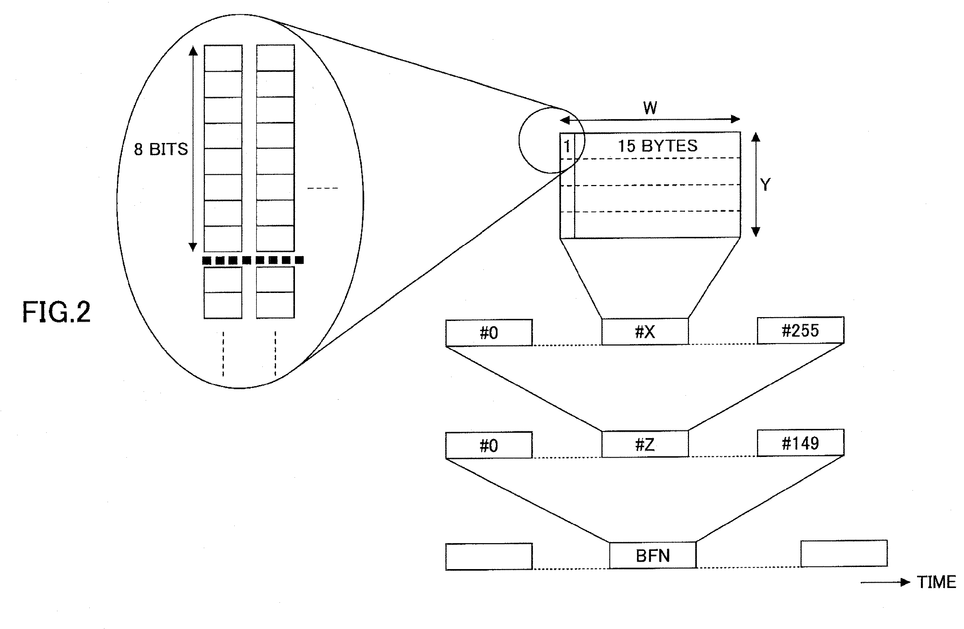

FIG. 2 illustrates a data structure of the CPRI. In FIG. 2, one of an up link and a down link in an optical cable (which may be referred to as a "CPRI link"), which is a physical CPRI medium, is illustrated. A bilateral physical medium includes an up link and a down link.

A minimum unit of a CPRI frame illustrated at a top-most part of FIG. 2 is referred to as a "basic frame". A one-bit sequence at the head of the basic frame when seen in a time axis corresponds to a control word (CW) area for transmission and reception of control data. A subsequent area corresponds to an IQ data area for storing IQ data for transmission and reception of a base band signal. By using the control word, control information is exchanged.

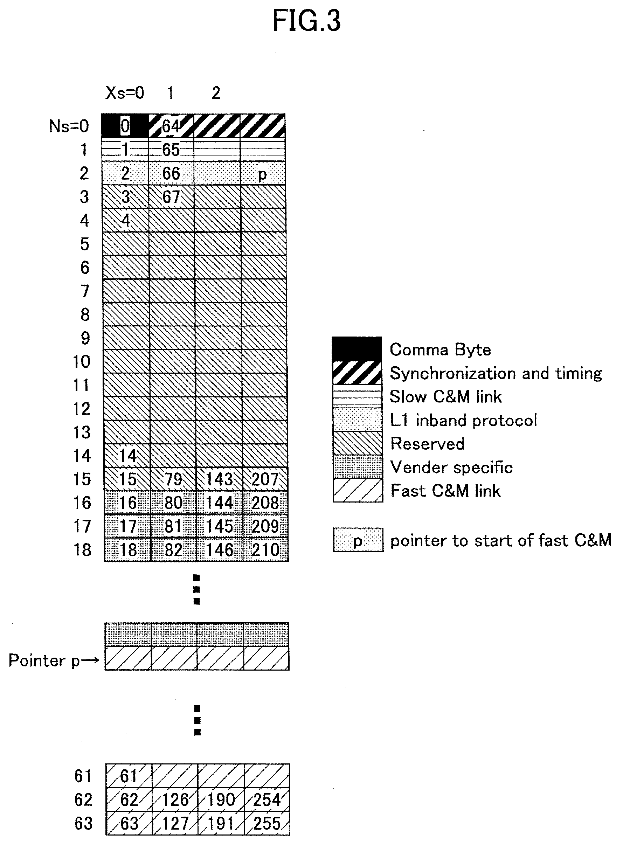

As illustrated in FIG. 3, one item of control information is constituted by collecting control words of a total of 256 basic frames that constitute one hyper frame. In FIG. 3, each of blocks 0 through 255 represents one basic frame of control words.

The control information made up of the control words of the hyper frame includes areas in which instructions are defined on a bit unit basis and portions referred to as "vendor-specific areas (including blocks 16 through 18, 80 through 82, 144 through 146, and 208 through 210) where a vendor can freely make definitions. Further, by using the remaining portions (areas in which start positions are designated by using a pointer "p" of the block 194), communication protocol information for layer 2 or above of the Ethernet (registered trademark), for example, is stored.

The CPRI is a definition within a closed area of a cell (corresponding to one wireless apparatus control unit), and does not include a definition about a transfer data destination across one or more cells. Further, although the CPRI includes a description of connection of multiple wireless apparatuses and their modes of connection, the CPRI is based on the assumption of transmission of the same data from plural of the wireless apparatuses and does not include a definition about controlling a data route on a frame unit basis.
Non-Patent Document 1: CPRI Specification V1.4

### SUMMARY OF THE INVENTION

### PROBLEM TO BE SOLVED BY THE INVENTION

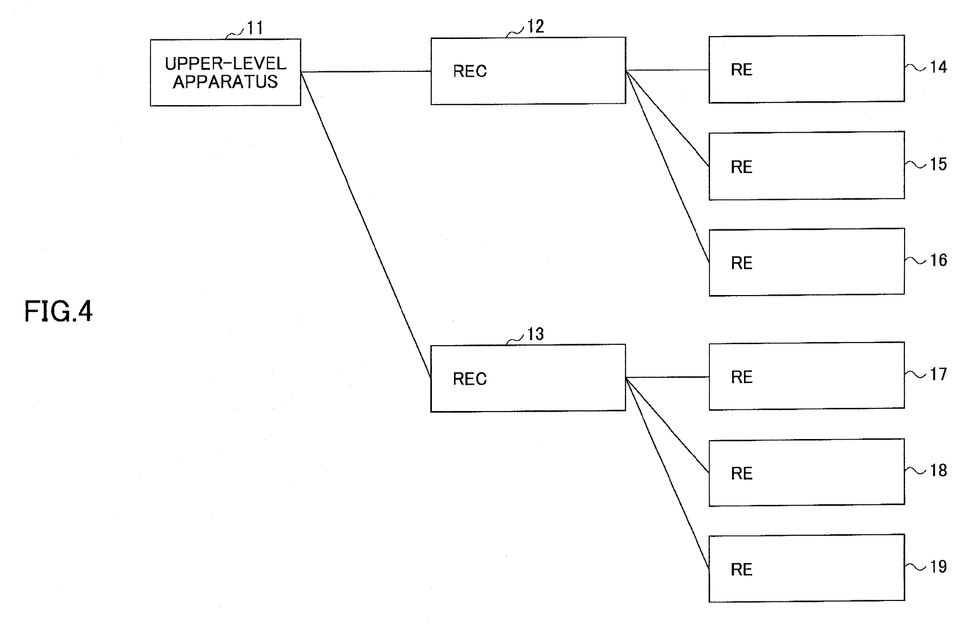

FIG. 4 illustrates an example of a network structure of a conventional mobile communication system. In FIG. 4, to an upper-level apparatus 11, wireless apparatus control units (REC) 12 and 13 of a wireless base station apparatus are connected. To the wireless apparatus control unit 12, wireless apparatuses (RE) 14, 15, and 16 included in the wireless base station apparatus are connected by CPRI. The wireless apparatus control unit 12 and the wireless apparatuses 14, 15, and 16 constitute a first cell. To the wireless apparatus control unit 13, wireless apparatuses 17, 18, and 19 included in the wireless base station apparatus are connected by the CPRI. The wireless apparatus control unit 13 and the wireless apparatuses 17, 18, and 19 constitute a second cell. The wireless apparatus control units 12 and 13 provide connection with the upper-level apparatus 11 and perform a base band processing. The wireless apparatuses 14 through 19 provide wireless connections with mobile terminals.

In the conventional network of the wireless base station apparatuses, there has been the problem that information cannot be exchanged by performing data communications between the wireless apparatus control unit 12 and the wireless apparatuses 14, 15, and 16 that make up the first cell and the wireless apparatus control unit 13 and the wireless apparatuses 17, 18, and 19 that make up the second cell.

Thus, in view of the foregoing, one object is to provide a mobile communication system, a wireless apparatus, and a wireless apparatus control apparatus by which information can be exchanged between wireless apparatuses or wireless apparatus control apparatuses that make up different cells.

### SUMMARY

According to an aspect of the invention, a mobile communication system include a cell constituted by connecting a wireless apparatus control apparatus and a wireless apparatus that are included in a wireless base station by using a predetermined interface. A first wireless apparatus that constitutes a first cell and a second wireless apparatus that constitutes a second cell different from the first cell and that is adjacent to the first wireless apparatus are connected by using the predetermined interface in order to perform data communication.

### EFFECTS OF THE INVENTION

In accordance with the present embodiment, information can be exchanged between wireless apparatuses or wireless apparatus control apparatuses constituting different cells.

### BRIEF DESCRIPTION OF DRAWINGS

FIGS. 1A, 1B, and 1C illustrate various modes of connection of the CPRI;
FIG. 2 illustrates a CPRI data structure;
FIG. 3 illustrates control information constituted by control words of a hyper frame;
FIG. 4 illustrates an example of a network configuration of a conventional mobile communication system;
FIG. 5 illustrates a network configuration of a mobile communication system according to an embodiment;
FIG. 6 illustrates an extended routing table according to an embodiment;
FIG. 7 is a block diagram of a wireless apparatus according to an embodiment;
FIG. 8 is a block diagram of a wireless apparatus control unit according to an embodiment;
FIG. 9 illustrates an operation sequence of a mobile communication system when a LTE-corresponding mobile terminal enters a HSPA-corresponding cell;
FIG. 10 illustrates an operation sequence of a mobile communication system when leveling of a base band processing resource is performed;
FIG. 11 illustrates a basic frame of a second method according to an embodiment;
FIG. 12 illustrates a basic frame of a third method according to an embodiment;
FIG. 13 illustrates a basic frame of a first method according to another embodiment;
FIG. 14 illustrates the basic frame of the second method according to another embodiment;
FIG. 15 illustrates the basic frame of the third method according to another embodiment; and
FIG. 16 is a flowchart of a process of selecting one of the first, the second, and the third method.

### DESCRIPTION OF EMBODIMENTS

Preferred embodiments of the present invention will be described with reference to the accompanying drawings.

### <Network Configuration of a Mobile Communication System>

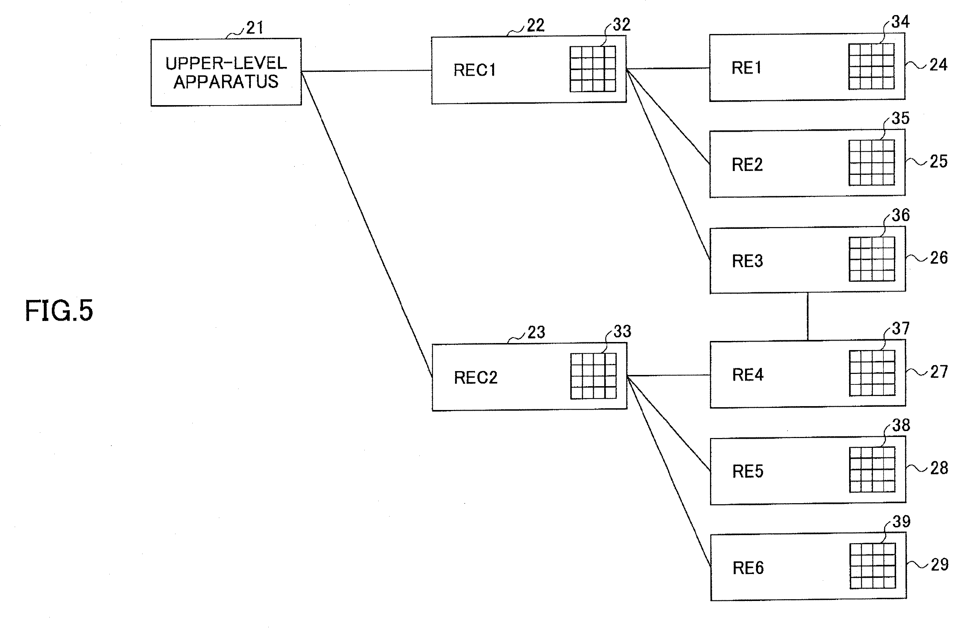

FIG. 5 illustrates a network configuration of a mobile communication system according to an embodiment. In FIG. 5, an upper-level apparatus 21 may include a base station control apparatus (RNC) in the case of a 3G system, or a serving gateway apparatus (sGW) in the case of a LTE (Long Term Evolution) system.

To the upper-level apparatus 21, wireless apparatus control units (REC: radio equipment controller) 22 and 23 of a wireless base station apparatus are connected. To the wireless apparatus control unit 22, wireless apparatuses (RE) 24, 25, and 26 included in the wireless base station apparatus are connected by the CPRI. The wireless apparatus control unit 22 and the wireless apparatuses 24, 25, and 26 constitute a first cell. To the wireless apparatus control unit 23, wireless apparatuses 27, 28, and 29 included in the wireless base station apparatus are connected by the CPRI. The wireless apparatus control unit 23 and the wireless apparatuses 27, 28, and 29 constitute a second cell. The wireless apparatus control units 22 and 23 provide connection with the upper-level apparatus 21 and perform a base band processing. The wireless apparatuses 24 through 29 provide wireless connections with mobile terminals.

The wireless apparatus control units 22 and 23 include extended routing tables 32 and 33, respectively, as storage units. The wireless apparatuses 24 through 29 include extended routing tables 34 through 39, respectively, as storage units.

Further, in accordance with the present embodiment, the wireless apparatuses 26 and 27, which are wireless apparatuses of the different cells and disposed in proximity to each other, are connected by the CPRI, so that communications between the different cells can be realized. An advantage of such an embodiment includes the ability to set a new service call in the second cell, for example, which does not correspond to a new service, or in a part of the second cell. Another advantage is that, when, for example, the base band processing resource of the wireless apparatus control unit 23 that controls the second cell is lacking, the data that has been subjected to the base band processing can be transferred from the adjacent first cell across the cells via the CPRI, thereby distributing the process resource of the system as a whole and realizing leveling.

In a conventional system, the system on the wireless end of the wireless apparatus control units has the tree structure. On the other hand, in accordance with the present embodiment, route control for IQ data is required in order to determine which wireless apparatus should be the transmission destination because of the new CPRI connection. In accordance with the present embodiment, an IP address is allocated to each of the wireless apparatus control units and wireless apparatuses in order to realize an IP network on the CPRI. When making a call setting in an adjacent cell, each wireless apparatus that serves as a node needs to manage the type of service of the adjacent cell, the number of nodes that are gone through when setting a call from the adjacent cell, and so on, aside from the IP network route control. Thus, each of the wireless apparatus control units and wireless apparatuses includes an extended routing table.

### <Structure of Extended Routing Table>

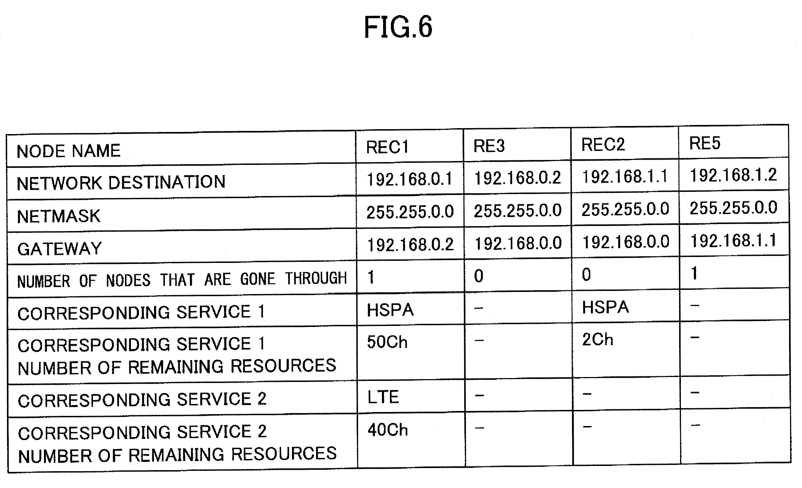

FIG. 6 illustrates an extended routing table according to an embodiment. Specifically, FIG. 6 illustrates an example of an extended routing table 37 that is provided in the wireless apparatus 27, for example. A routing table may normally include information about a node name, the address of a node of a network destination, a subnet mask, and the address of a gateway (next node for connection with a network destination). In contrast, the extended routing table is extended by adding information about the number of nodes that are gone through, corresponding services 1, 2, ..., and so on, and remaining resources 1, 2, ..., and so on. The number of nodes that are gone through is provided as an indication of IQ data transfer delay. The corresponding services indicate services provided by the wireless apparatus control units, such as 3G and LTE. The remaining resources indicate base band processing resources in the wireless apparatus control units.

In FIG. 6, as the node names of the routing destinations, the wireless apparatus control unit 22 (REC1), the wireless apparatus (RE3) 26, the wireless apparatus control unit 23 (REC2), and the wireless apparatus (RE3) 26 are registered. Regarding the wireless apparatus control unit 22 (REC1), the network destination is "192.168.0.1", the subnet mask is "255.255.0.0", the gateway address is "192.168.0.2", the number of nodes that are gone through is "1", the corresponding service 1 is "HSPA (High Speed Packet Access)", the remaining resource of the corresponding service 1 (base band processing resource) is "50 channels", the corresponding service 2 is "LTE", and the remaining resource of the corresponding service 2 is "40 channels".

Regarding the wireless apparatus control unit 23 (REC2), the network destination is "192.168.1.1", the subnet mask is "255.255.0.0", the gateway address is "192.168.0.0", the number of nodes that are gone through is "0", the corresponding service 1 is "HSPA", and the remaining resource of the corresponding service 1 (base band processing resource) is "2 channels".

In FIG. 6, the wireless apparatus control unit 22 (REC1) corresponds to LTE, which is a new service, and HSPA, which is an old service. On the other hand, the wireless apparatus control unit 23 (REC2) corresponds to only HSPA and does not provide the new service (LTE).

### <Structure of Wireless Apparatus>

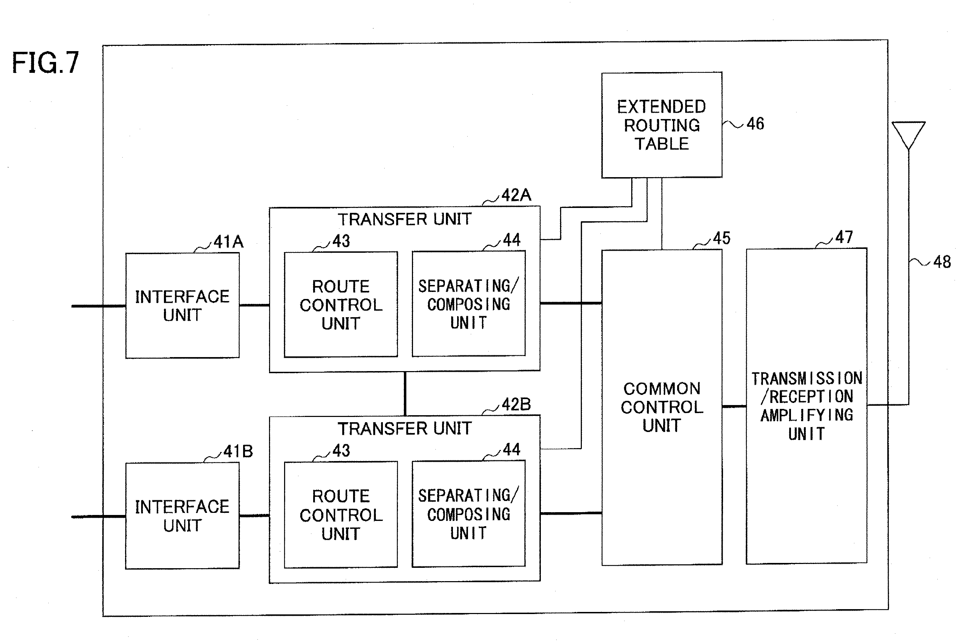

FIG. 7 is a block diagram of a wireless apparatus according to an embodiment. In the following, the wireless apparatus 27 is described as an example. In FIG. 7, an interface unit 41A is connected to an interface unit of the wireless apparatus control unit 23 via an optical cable in order to perform transmission and reception of a CPRI frame. An interface unit 41B is connected to an interface unit of another wireless apparatus 26 via an optical cable in order to perform transmission and reception of a CPRI frame.

The CPRI frame received by the interface unit 41A or 41B is supplied to a transfer unit 42A or 42B.

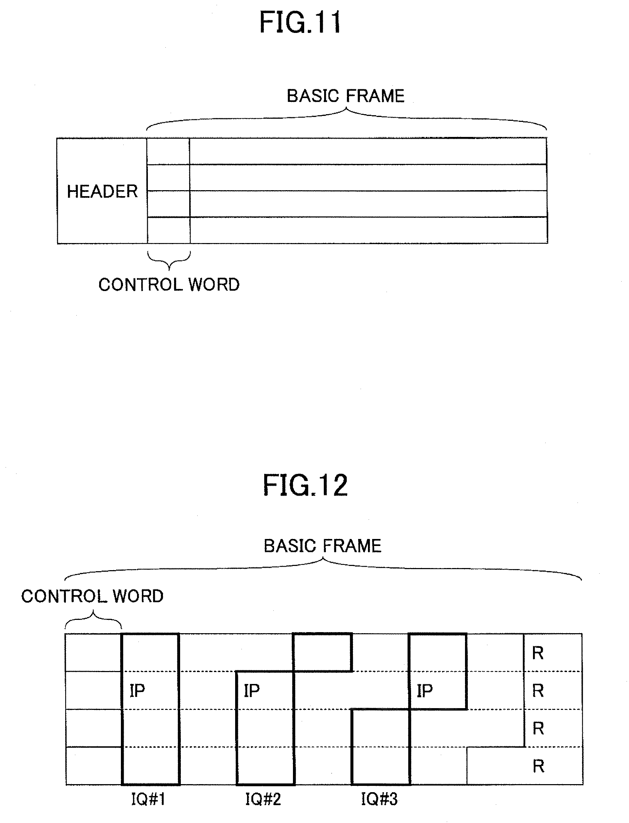

Each of the transfer units 42A and 42B includes a route control unit 43 and a separating/composing unit 44. The route control units 43 determine whether the destination of the IQ data of the CPRI frame supplied from the interface unit 41A or 41B is its own apparatus or another wireless apparatus. In this case, the transfer destination of the IQ data is determined by referring to the extended routing table 46 based on a route control IP address in the vendor-specific area of the hyper frame illustrated in FIG. 3, or a route control IP address illustrated in one of FIGS. 11 through 15 which will be described later.

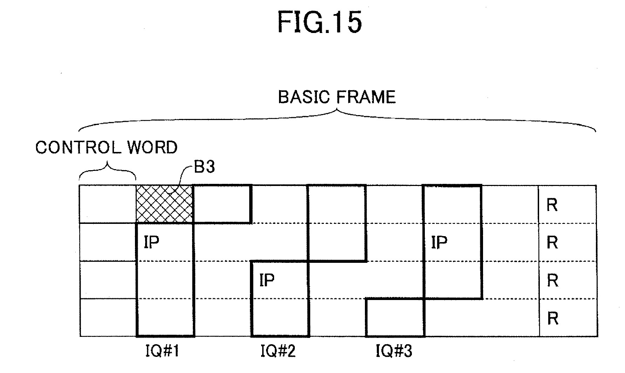

The separating/composing units 44 may separate the route control IP address and the IQ data from the basic frame of FIG. 12 or 15 which will be described later. The separating/composing units 44 may also convert the separated route control IP address and IQ data into the form of the basic frame (having only one route control IP address and only one IQ data) illustrated in FIG. 12 or 15. The separating/composing unit 44 may also collect plural of the basic frames each having only one route control IP address and only one IQ data and compose the basic frame of FIG. 12 or 15 having plural of the route control IP addresses and IQ data in a multiplexed manner.

The transfer unit 42A or 42B, when the transfer destination of the basic frame supplied from the interface unit 41A or 41B or the converted basic frame is its own apparatus, supplies the basic frame or the converted basic frame to the common control unit 45. On the other hand, when the transfer destination of the basic frame supplied from the interface unit 41A or 41B or the converted basic frame is the other wireless apparatus 26 or 27, the transfer unit 42A or 42B transfers the basic frame or the converted basic frame to the transfer unit 42B or 42A.

Each of the transfer units 42A and 42B composes the basic frame of the received IQ data supplied from the common control unit 45 and the basic frame supplied from the transfer unit 42B or 42A having only one route control IP address and only one IQ data into the basic frame of FIG. 12 or 15 in a multiplexed manner on a route control IP address basis, and then supplies the composed basic frame to the CPRI interface 41A or 41B.

The common control unit 45 forms a hyper frame by collecting the CPRI frames (basic frames) supplied from the transfer units 42A and 42B, and then obtains the control information illustrated in FIG. 3 from the control words of the hyper frame. The common control unit 45 performs an analysis of the vendor-specific area in the control information and a process in accordance with an analysis result. As a result, when the hyper frame is for IP communication addressed to the own apparatus, the common control unit 45 terminates the hyper frame and performs an IP communication process. When the hyper frame is a wireless frame transmitted from the own apparatus, the common control unit 45 exerts control as to which antenna and which carrier wave should be used for outputting the IQ data of the hyper frame. When the hyper frame is for IP communication addressed to another wireless apparatus or wireless apparatus control unit as a destination based on the route information in the vendor-specific area of the hyper frame, the common control unit 45 refers to the extended routing table 46 and transfers the hyper frame to the destination apparatus via the transfer unit 42A or 42B and the interface unit 41A or 41B. Further, the common control unit 45 establishes communication according to communication protocol information, such as the Ethernet (registered trademark), included in the control information illustrated in FIG. 3.

Further, the common control unit 45 generates a CPRI frame (of the form of FIG. 3 or any of FIGS. 11 through 15) in order to perform IP communication addressed to another wireless apparatus or wireless apparatus control unit. The common control unit 45 then transmits the CPRI frame to the destination apparatus via the transfer unit 42A or 42B and the interface unit 41A or 41B by referring to the extended routing table 46.

In accordance with the present embodiment, the wireless apparatus 27 can perform communications of routing information, for example, not only with the wireless apparatus control units 22 and 23 but also with other wireless apparatuses 24 through 26, 28, and 29 by using the IP network.

The common control unit 45 D/A converts the IQ data obtained from the hyper frame addressed to the own apparatus for transmission as a wireless frame, amplifies the converted data by the transmission/reception amplifying unit 47, and then transmits the amplified data via the antenna 48. A wireless frame received from a mobile terminal (UE) via the antenna 48 is amplified by the transmission/reception amplifying unit 47 and then supplied to the common control unit 45.

The common control unit 45, by referring to the extended routing table 46 based on the destination of the received wireless frame, determines whether the destination of the received wireless frame is the wireless apparatus control unit or another wireless apparatus. Depending on a result of the determination, the common control unit 45 supplies IQ data converted from the received wireless frame to the IQ data separating/composing unit 43A or 43B.

The extended routing table 46 corresponds to the extended routing tables 34 through 39 in FIG. 5. The common control unit 45 performs a write or a read into or from the extended routing table 46. The IQ data separating/composing units 43A and 43B perform a read from the extended routing table 46.

### <Structure of Wireless Apparatus Control Unit>

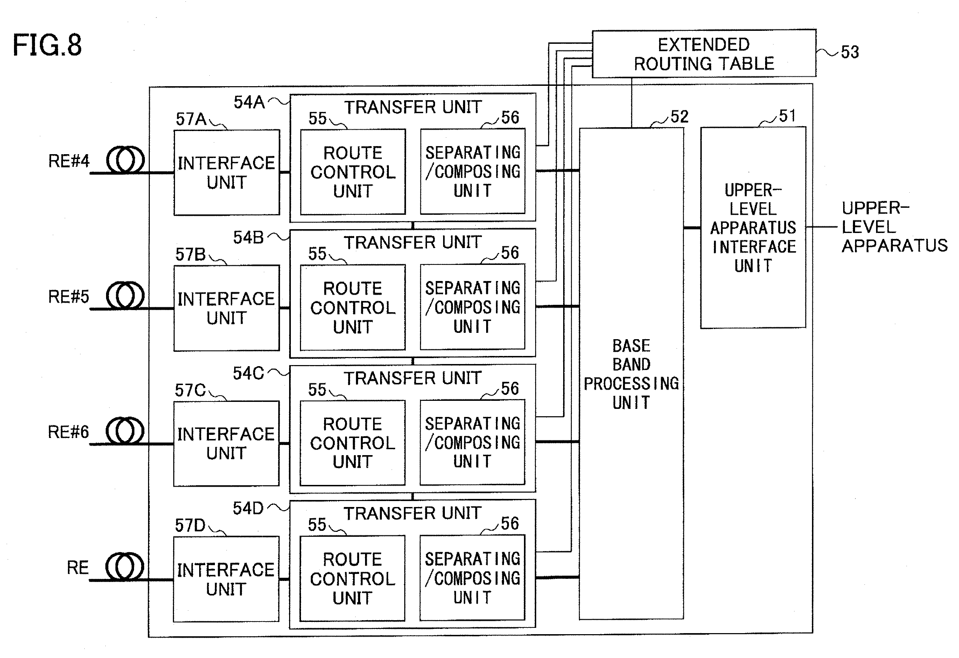

FIG. 8 is a block diagram of a wireless apparatus control unit according to an embodiment. In the following, the wireless apparatus control unit 23 is described as an example. In FIG. 8, the upper-level apparatus interface unit 51 is connected to the upper-level apparatus 21 and performs transmission and reception of line data. The line data received by the upper-level apparatus interface unit 51 is supplied to the base band processing unit 52.

The base band processing unit 52 generates IQ data for each of the wireless apparatuses from the received line data, and also generates hyper frames for transmitting the IQ data to each of the wireless apparatuses. The base band processing unit 52 also refers to the extended routing table 53 based on the destination of the line data and determines which wireless apparatus is the destination of each hyper frame. As a result, the base band processing unit 52 distributes the hyper frames to the interface units 57A through 57D via the transfer units 54A through 54D. The extended routing table 53 has a structure similar to the extended routing table 37 illustrated in FIG. 7.

The base band processing unit 52 also generates a CPRI frame for IP communication with another wireless apparatus or wireless apparatus control unit as a destination. The base band processing unit 52 refers to the extended routing table 53 and transfers the CPRI frame to the destination apparatus via the transfer units 54A through 54D and the interface units 57A through 57D.

The interface unit 57A is connected to the interface unit of the wireless apparatus 27 via an optical cable and performs a transmission and reception of the CPRI frame. Similarly, the interface units 57B and 57C are connected to the interface units of the wireless apparatuses 28 and 29, respectively, via optical cables and perform a transmission and reception of the CPRI frame. Similarly, the interface unit 57D is connected to the interface unit of the corresponding wireless apparatus via an optical cable and performs a transmission and reception of the CPRI frame.

Each of the transfer units 54A through 54D includes a route control unit 55 and a separating/composing unit 56. The route control unit 55 determines whether the destination of the IQ data of the CPRI frame supplied from the interface units 57A through 57D is its own apparatus or another wireless apparatus. In this case, the transfer destination of the IQ data is determined by referring to the extended routing table 53 based on the route control IP address in the vendor-specific area of the hyper frame illustrated in FIG. 3, or the route control IP address illustrated in any of FIGS. 11 through 15 which will be described later.

The separating/composing unit 56 may separate the route control IP address and IQ data from the basic frame of FIG. 12 or 15 which will be described later. The separating/composing unit 56 may also convert each of plural separated route control IP addresses and IQ data into the form of the basic frame illustrated in FIG. 12 or 15 (having only one route control IP address and only one IQ data). The separating/composing unit 56 may also collect plural of the basic frames each having only one route control IP address and only one IQ data and compose the basic frame of FIG. 12 or 15 having plural of the route control IP addresses and IQ data in a multiplexed manner.

Each of the transfer units 54A through 54D, when the transfer destination of the basic frame supplied from the interface units 57A through 57D or the converted basic frame is its own apparatus, supplies the basic frame or the converted basic frame to the base band processing unit 52. On the other hand, when the transfer destination of the basic frame supplied from the interface units 57A through 57D or the converted basic frame is another wireless apparatus, each of the transfer units 54A through 54D supplies the basic frame or the converted basic frame to the transfer units 54B through 54D and 54A.

Each of the transfer units 54A through 54D also composes the basic frame of the received IQ data supplied from the base band processing unit 52 and the basic frame supplied from each of the transfer units 54B through 54D and 54A that has only one route control IP address and only one IQ data into the basic frame of FIG. 12 or 15 in a multiplexed manner for each route control IP address, and supplies the composed basic frame to the CPRI interfaces 54A through 54D.

The base band processing unit 52 forms a hyper frame by collecting the CPRI frames (basic frames) supplied from the transfer units 54A through 54D, and obtains the control information illustrated in FIG. 3 from the control words of the hyper frame. The base band processing unit 52 performs an analysis of the vendor-specific area of the control information and performs a process in accordance with an analysis result. As a result, when the hyper frame is for IP communication addressed to the own apparatus, the base band processing unit 52 terminates the hyper frame and performs a process for IP communication. When the hyper frame is a wireless frame for transmission from the own apparatus to the upper-level apparatus 21, the base band processing unit 52 recovers the wireless frame for each wireless apparatus from the IQ data of the hyper frame, converts the wireless frame into line data, and transmits the line data via the upper-level apparatus interface unit 51 to the upper-level apparatus 21.

When the hyper frame, based on the route information of the vendor-specific area, is for IP communication with another wireless apparatus or wireless apparatus control unit as a destination, the base band processing unit 52 refers to the extended routing table 53 and transfers the hyper frame via the transfer units 54A through 54D and the interface units 57A through 57D to the destination apparatus. Further, the base band processing unit 52 establishes communication according to communication protocol information, such as the Ethernet (registered trademark), included in the control information illustrated in FIG. 3. The extended routing table 53 corresponds to the extended routing table 32 or 33 illustrated in FIG. 5. The base band processing unit 52 performs a write and a read into or from the extended routing table 53. The transfer units 54A through 54D perform reads from the extended routing table 46.

### <Collection of Information from Extended Routing Table>

Information in the extended routing tables 32 through 39 of the wireless apparatus control units and the wireless apparatuses are automatically collected after physical lines of the network are installed. In this case, the wireless apparatus control units 22 and 23 have a DHCP (Dynamic Host Configuration Protocol) server function, while the wireless apparatuses 24 through 29 have a DHCP client function.

Each node (namely, each of the wireless apparatus control units and the wireless apparatuses) organizes and prepares the extended information, such as the number of nodes that are gone through, the corresponding service, and the number of remaining resources, upon start-up of the apparatus, so that the extended information can be referenced upon a query from other nodes. For this purpose, a working table may be defined, or an own node may be added in a column of the extended routing table. The extended information is maintained in the latest state each time an apparatus state is changed. A node with which connection has been confirmed by DHCP sends an information query to a relevant node in order to collect the extended information in the extended routing table.

The contents of the extended routing table of each node may be manually set by a system administrator in advance.

### <Transition from an Old Service to a New Service>

One of the problems encountered when transitioning from the old service, such as 3G (third generation) to the new service, such as LTE is that there is no backward compatibility from LTE to 3G. A user who has purchased a mobile terminal (UE) corresponding to LTE cannot perform communications in a cell corresponding to only a 3G-corresponding service during a transition period from 3G to LTE. Such communications are enabled by the present embodiment.

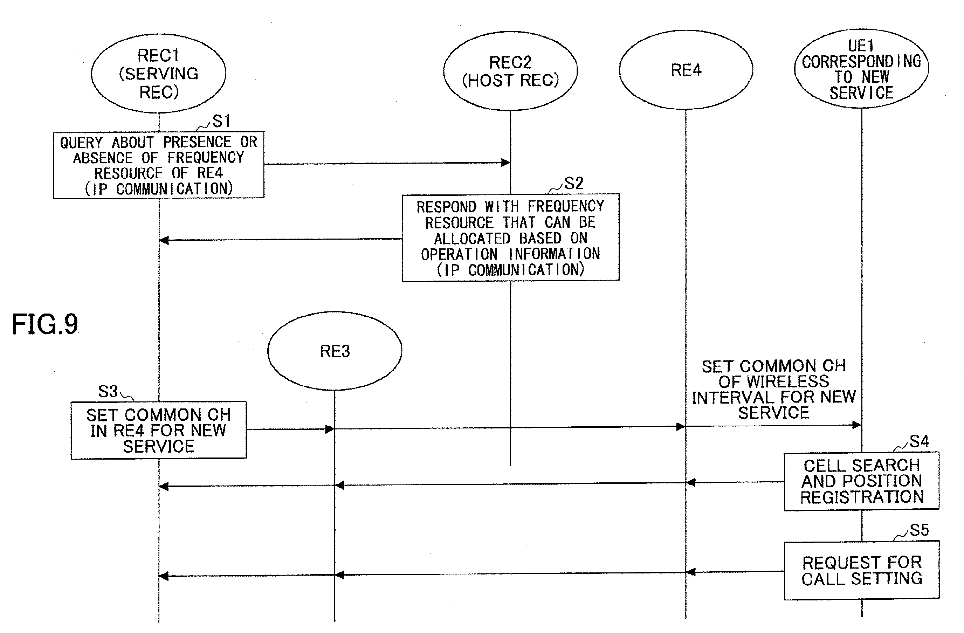

FIG. 9 illustrates an operation sequence of a mobile communication system when a LTE-corresponding mobile terminal (UE1) has entered a sector of the wireless apparatus 27 constituting the HSPA-corresponding second cell. In FIG. 9, in step S1, the wireless apparatus control unit 22 (REC1) constituting the first cell and corresponding to LTE and HSPA refers to the extended routing table 33 and determines that the wireless apparatus 27 (RE4), with respect to which the number of nodes that are gone through from the own apparatus is "1", may be caused to perform an LTE connection. Thus, the wireless apparatus control unit 22 (REC1) queries, via IP communication, the wireless apparatus control unit 23 (REC2) of the adjacent second cell as to the presence or absence of a frequency resource of the wireless apparatus 27 (RE4).

Step S1 may be performed upon a setting instruction from the upper-level apparatus 21. At this time, whether a wireless apparatus with respect to which the number of nodes that are gone through is X (X is an integer such as 1, 2, 3, and so on) or less is caused to perform an LTE connection is instructed from the upper-level apparatus 21 to the wireless apparatus control unit 22 (REC1). This is because the IQ data transfer delay increases and real-time communications become more difficult as the number of nodes that are gone through increases.

In step S2, the wireless apparatus control unit 23 (REC2) calculates a frequency resource that can be allocated to the wireless apparatus 27 (RE4) for the new service LTE, based on operation information of the wireless apparatus 27 (RE4) managed by the own apparatus, and responds to the wireless apparatus control unit 22 by IP communication.

In step S3, the wireless apparatus control unit 22 (REC1), when the base band processing resource of the own apparatus is sufficient, generates an instruction message for setting a common channel for the new service LTE in the wireless apparatus 27 (RE4) and transmits the message to the wireless apparatus 27 (RE4) via the wireless apparatus 26 (RE3) by IP communication. Thus, the wireless apparatus 27 (RE4) sets the common channel (wireless interval) for the new service LTE in the sector of its own apparatus. Here, the common channel for LTE includes a DCH (dedicated channel), a BCH (broadcast channel), and a RACH (random access channel).

Thereafter, when the LTE-corresponding mobile terminal (UE1) that has entered the sector of the wireless apparatus 27 (RE4) performs a cell search and a position registration in step S4, the position registration information is supplied from the wireless apparatus 27 (RE4) via the wireless apparatus 26 (RE3) to the wireless apparatus control unit 22 (REC1). When the mobile terminal (UE1) performs a call setting request in step S5, the call setting request is supplied from the wireless apparatus 27 (RE4) via the wireless apparatus 26 (RE3) to the wireless apparatus control unit 22 (REC1).

Thus, the user of the LTE-corresponding mobile terminal (UE1) can receive a LTE-corresponding service in a cell corresponding to a 3G-corresponding service even during the transition period from 3G to LTE.

### <Leveling of Base band processing resource of Wireless Apparatus>

Normally, the base band processing resource of a wireless apparatus control unit is provided by estimating the number of required accommodating channels based on the conditions of an area for installation of a wireless base station apparatus, and then furnishing a physical resource sufficient for the base band processing for the number of accommodating channels.

For example, when the number of accommodating channels in an area increases unexpectedly due to the occurrence of an event, the base band processing volume may become excessive and the operation may become impossible. In order to deal with such a situation, it may be necessary to introduce a mechanism for dynamically adjusting the base band processing resource of the wireless apparatus control unit after installation so that the resources can be leveled.

In order to realize the resource leveling, the wireless apparatus control units may need to be connected to each other. However, although the wireless apparatus control units are indirectly connected via the upper-level apparatus, a sufficient band for carrying data (IQ data) after the base band processing is not ensured. Furthermore, because the upper-level apparatus that performs relaying is located far away from the wireless base station, connections via the upper-level apparatus may be difficult.

In accordance with the present embodiment, focusing on the fact that, while the wireless apparatuses constituting a cell are located away from the wireless apparatus control unit by a maximum of several kilometers, the wireless apparatuses of different cells may be located at distances of less than several kilometers from each other, and wireless apparatuses of different cells that are adjacent to each other are connected by the CPRI. In this way, the wireless apparatus control units of the different cells can be connected to each other, thereby realizing the resource leveling.

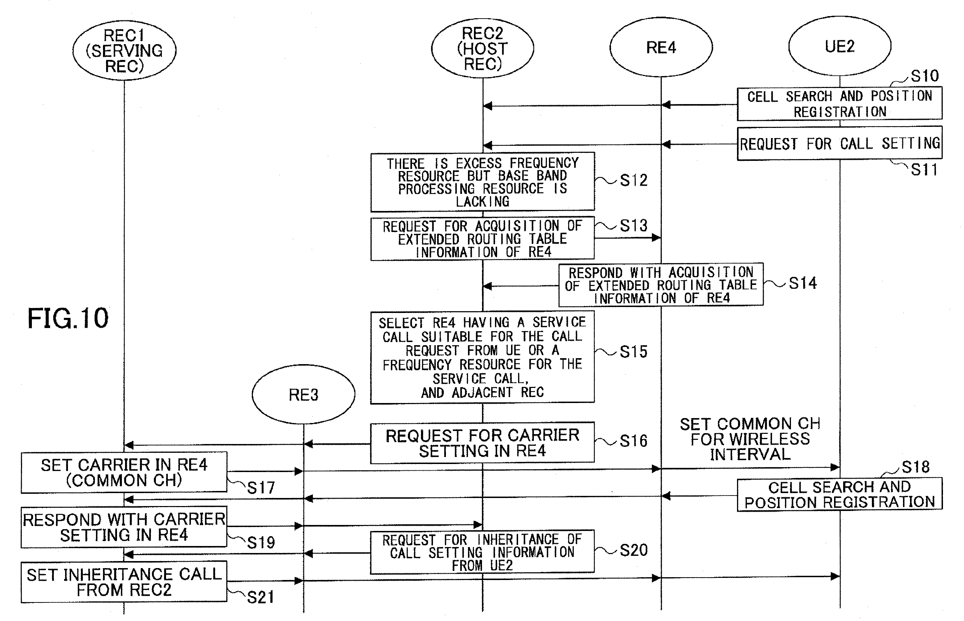

FIG. 10 illustrates an operation sequence of a mobile communication system that performs leveling of the base band processing resources of wireless apparatus control units. In FIG. 10, in step S10, when the HSPA-corresponding mobile terminal (UE2) performs a cell search and a position registration, the position registration information is supplied from the wireless apparatus 27 (RE4) to the wireless apparatus control unit 23 (REC2). When the mobile terminal (UE2) performs a call setting request in step S11, the call setting request is supplied from the wireless apparatus 27 (RE4) to the wireless apparatus control unit 23 (REC2).

In step S12, the wireless apparatus control unit 23 (REC2) may determine that, although there is an excess of the frequency resource in the wireless apparatus 27 (RE4) based on the operation information of the wireless apparatus 27 managed by the own apparatus, the base band processing resource in the own apparatus is lacking. In this case, the wireless apparatus control unit 23 (REC2) in step S13 transmits a request for acquiring the extended routing table 37 to the wireless apparatus 27 (RE4) by IP communication.

In step S14, the wireless apparatus 27 then responds to the extended routing table acquisition request by transmitting the contents of the extended routing table 37 of the own apparatus to the wireless apparatus control unit 23 (REC2) by IP communication. In step S15, the wireless apparatus control unit 23 (REC2) selects, based on the contents of the extended routing table 37, the wireless apparatus control unit 22 (REC1) which is adjacent the wireless apparatus 27 (RE4) and that has a service call suitable for the call setting request of the mobile terminal (UE2) and the frequency resource for the service call.

In step S16, the wireless apparatus control unit 23 (REC2) transmits a carrier setting request requesting the wireless apparatus control unit 22 (REC1) to set a carrier (carrier wave frequency) in the wireless apparatus 27 (RE4), via the wireless apparatus 26 (RE3) by IP communication.

In step S17, the wireless apparatus control unit 22 (REC1) generates an instruction message for the wireless apparatus 27 (RE4) for setting a common channel for a carrier setting for the mobile terminal (UE2), and transmits the message to the wireless apparatus 27 (RE4) via the wireless apparatus 26 (RE3) by IP communication. Thus, the wireless apparatus 27 (RE4) sets the common channel (wireless interval) for the carrier setting for the mobile terminal (UE2).

Thereafter, when the mobile terminal (UE2) performs a cell search and a position registration in step S18, the position registration information is supplied from the wireless apparatus 27 (RE4) via the wireless apparatus 26 (RE3) to the wireless apparatus control unit 22 (REC1). Thus, the wireless apparatus control unit 22 (REC1) in step S19 sends a response indicating the completion of carrier setting to the wireless apparatus control unit 23 (REC2) by IP communication.

Then, in step S20, the wireless apparatus control unit 23 (REC2) transmits the inherit request by IP communication, requesting the wireless apparatus control unit 22 (REC1) to inherit the call setting information from the mobile terminal (UE2).

Thus, in step S21, the wireless apparatus control unit 22 (REC1) generates an instruction message for setting an inherit call from the wireless apparatus control unit 23, and transmits the message to the wireless apparatus 27 (RE4) by IP communication via the wireless apparatus 26 (RE3). Accordingly, the wireless apparatus 27 (RE4) makes a call setting for the mobile terminal (UE2).

When the mobile terminal (UE) is in the sector of the wireless apparatus 27 (RE4), the transmission and reception of the IQ data between the mobile terminal (UE) and the wireless apparatus control unit 22 (REC1) are performed via the wireless apparatus 27 (RE4), the wireless apparatus 26 (RE3), and the wireless apparatus control unit 22 (REC1). When the mobile terminal (UE) is in the sector of the wireless apparatus 28 (RE5), the transmission and reception of the IQ data between the mobile terminal (UE) and the wireless apparatus control unit 22 (REC1) are performed via the wireless apparatus 28 (RE5), the wireless apparatus control unit 23 (REC2), the wireless apparatus 27 (RE4), the wireless apparatus 26 (RE3), and the wireless apparatus control unit 22 (REC1).

### <Fixed Selection of Route Control>

In order to realize the route control in the IP communications between the wireless apparatus control unit and the wireless apparatus as described above, destination information needs to be added. As illustrated in FIG. 3, one hyper frame is made up of 256 basic frames. In the hyper frame, a sub-channel (control information) is constituted by a control word of the initial 8 bits of each basic frame × n (n=1, 2, 3, or 4, depending on the CPRI transfer capacity). An area for the control information corresponds to an area that provides the layer-1 interface according to the CPRI definition. At the same time, the area includes the vendor-specific area (blocks 16 through 18, 80 through 82, 144 through 146, and 208 through 210). Thus, in a first method, a route control IP address as a destination of the IQ data is stored in the vendor-specific area. The IQ data, i.e., the contents of the IP communication, are stored in an IQ data area of the basic frame constituting the hyper frame. In the above method by which the IP address is stored in the vendor-specific area, the IQ data per carrier (carrier wave frequency) is transmitted with a delay corresponding to one hyper frame or more.

Thus, in a second method, the minimum unit of route control corresponds to one basic frame. The control word per basic frame is 8 bits × n (n=1, 2, 3, or 4) or a maximum of 32 bits. Thus, when the CPRI transfer capacity is maximum (n=4), 32 bits of IP address can be stored in the control word. However, this would exhaust the control word, making it impossible to constitute the sub-channel (control information) by the control word and failing to function as the CPRI.

Therefore, as illustrated in FIG. 11, a header of 32 bits for storing the route control IP address is added at the head of the basic frame. In this way, the delay of IQ data per carrier can be significantly decreased.

When it is necessary to further decrease the delay of IQ data per carrier, a third method may be used. As illustrated in FIG. 12, the IQ data area of the basic frame is divided into plural units (three units in the illustrated example), and the route control IP address (IQ#1, IQ#2, and IQ#3) and the IQ data are stored in the initial 32 bits of each divided unit. In FIG. 12, "R" indicates a reserve area. In this structure, while the delay of IQ data becomes very small, the proportion of the IP address with respect to the entire transmission data increases, resulting in a decrease in transfer efficiency.

By fixedly selecting and utilizing one of the first through third methods depending on the type or characteristics of a service, an overall optimization can be achieved.

### <Variable Selection of Route Control>

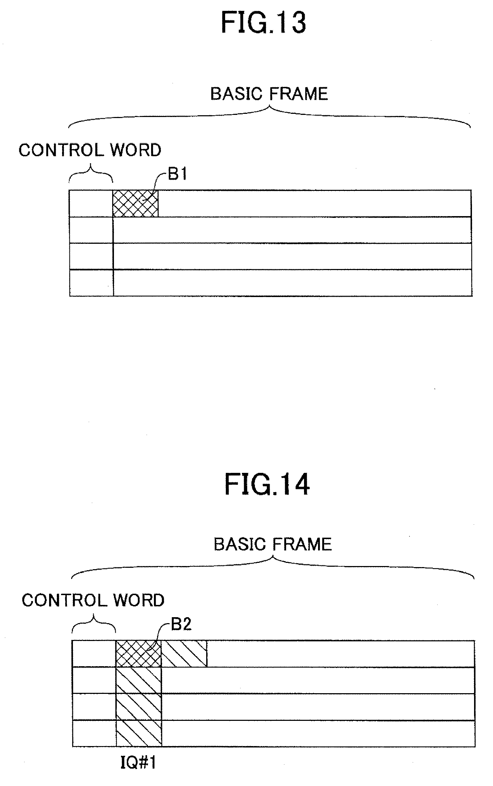

It is also possible to select and utilize one of the first through third methods. When the IQ data is transmitted by the first method, i.e., on the hyper frame unit basis, each of the 256 basic frames of the hyper frame includes an identifier B1 (such as "0x00000001", where "0x" indicates a hexadecimal representation) according to the first method stored in the initial one byte of the IQ data area, as illustrated in FIG. 13.

When the IQ data is transmitted by the second method, i.e., on the basic frame unit basis, instead of adding the 32 bits of a header at the head of the basic frame as illustrated in FIG. 11, an identifier B2 (such as "0x00000010") according to the second method is stored in the initial one byte of the IQ data area, as illustrated in FIG. 14, and the route control IP address (IQ#1) is stored in the IQ data area following the identifier B2.

In the third method, instead of dividing the IQ data area into plural units from the initial byte, as illustrated in FIG. 12, an identifier B3 (such as "0x00000011") of the third method is stored in the initial one byte of the IQ data area, as illustrated in FIG. 15, the IQ data area following the identifier B3 is divided into plural portions, and the route control IP address (IQ#1, IQ#2, and IQ#3) is stored in the initial 32 bits of each of the divided units.

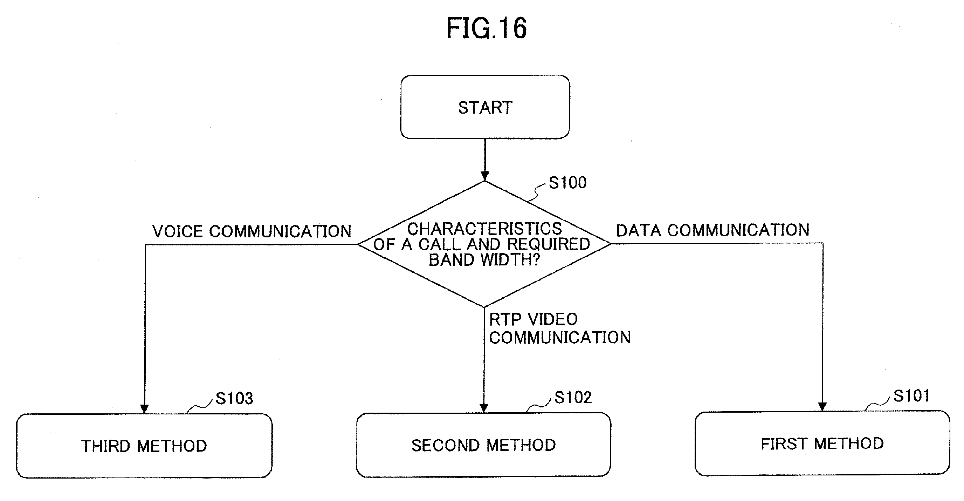

In accordance with this embodiment, the wireless apparatus or wireless apparatus control unit that performs transmission for IP communication selects one of the first through third methods in accordance with a flowchart of FIG. 16. In FIG. 16, in step S100, the characteristics and a required band width of a call to be connected by IP communication are determined. For example, when it is determined that the call to be connected involves data communication that is robust against delay and requires a relatively large transfer capacity, the first method is selected in step S101 and the basic frame illustrated in FIG. 13 is generated.

On the other hand, when it is determined that the call to be connected involves a RTP (Real-time Transport Protocol) video communication that has a high real-time property and requires a relatively large transfer capacity, the second method is selected in step S102 and the basic frame illustrated in FIG. 14 is generated.

Further, when it is determined that the call to be connected has a very high real-time property and requires a relatively small transfer capacity, such as VoIP voice communication, the third method is selected in step S103 and the basic frame illustrated in FIG. 15 is generated.

The above processes may be performed by the common control unit 45 of a wireless apparatus or the base band processing unit 52 of a wireless apparatus control unit.

Upon reception of the basic frame of FIG. 13, 14, or 15, the IQ data separating/composing units 43A and 43B and the common control unit 45 of the wireless apparatus, or the IQ data separating/composing units 54A through 54D and the base band processing unit 52 of the wireless apparatus control unit identify one of the first through third methods by referring to the identifier B1, B2, or B3, and performs a process according to the identified method.

### Explanation of the Reference Numerals

- 21: Upper-level apparatus
- 22, 23: Wireless apparatus control unit (REC)
- 24: through 29 Wireless apparatus (RE)
- 32: through 39, 46, 53 Extended routing table
- 41A,: 41B, 57A through 57D Interface unit
- 42A,: 42B Transfer unit
- 43: Route control unit
- 44: Separating/composing unit
- 45: Common control unit
- 47: Transmission/reception amplifying unit
- 48: Antenna
- 51: Upper-level apparatus interface unit
- 52: Base band processing unit
- 54A: through 54D Transfer unit
- 55: Route control unit
- 56: Separating/composing unit

## Claims

1. A mobile communication system in which a cell is constituted by connecting a wireless apparatus control apparatus and a wireless apparatus that are included in a wireless base station by using a predetermined interface,
wherein a first wireless apparatus that constitutes a first cell and a second wireless apparatus that constitutes a second cell different from the first cell and that is adjacent to the first wireless apparatus are connected by using the predetermined interface in order to perform data communication.

2. The mobile communication system according to claim 1, wherein each of the wireless apparatuses and wireless apparatus control apparatuses that constitute the first and the second cells includes a storage unit in which at least a destination node address, an address of a node connected a stage subsequent to an own node, and a number of nodes that are gone through are registered on a node by node basis.

3. The mobile communication system according to claim 2, wherein the storage unit further registers, for the node corresponding to the wireless apparatus control apparatus, a corresponding service, and a number of remaining resources capable of performing a process.

4. The mobile communication system according to claim 3, wherein the wireless apparatus control apparatus is configured to set the corresponding service of an own cell in the wireless apparatus of a different cell that does not include the corresponding service of the own cell.

5. The mobile communication system according to claim 4, wherein the corresponding service of the own cell includes a new service, and the service of the different cell includes an old service.

6. The mobile communication system according to claim 3, wherein, when the number of the remaining resources capable of performing the process of the own apparatus is lacking, the wireless apparatus control apparatus is configured to request the wireless apparatus control apparatus constituting the different cell to perform the process of the own apparatus.

7. The mobile communication system according to any one of claims 1 through 6, wherein the data communication includes a transmission or reception performed by using a hyper frame constituted by a predetermined number of basic frames of the predetermined interface as a unit.

8. The mobile communication system according to any one of claims 1 through 6, wherein the data communication includes a transmission or reception performed by using a basic frame of the predetermined interface as a unit.

9. The mobile communication system according to any one of claims 1 through 6, wherein the data communication includes a transmission or reception performed by multiplexing data of a plurality of destinations in a basic frame of the predetermined interface.

10. A wireless apparatus in a mobile communication system in which a cell is constituted by connecting a wireless apparatus control apparatus and the wireless apparatus that are included in a wireless base station by using a predetermined interface,
wherein the wireless apparatus comprises:
a first interface that includes the predetermined interface connected to the wireless apparatus control apparatus of an own cell;
a second interface that includes the predetermined interface connected to the wireless apparatus of a cell different from the own cell;
a storage unit in which at least a destination node address, an address of a node connected in a stage subsequent to an own node, and a number of nodes that are gone through are registered on a node by node basis;
a transfer unit configured to determine a destination of received data communication and, when the determined destination is not an own apparatus, refer to the storage unit based on the determined destination, and perform a transfer to the determined destination by transmitting the data of the received data communication via the first or the second interface;
a control unit configured to, when the destination determined by the transfer unit is the own apparatus, terminate the data of the received data communication supplied from the transfer unit, generate data of data communication to be transmitted to the wireless apparatus control apparatus or the wireless apparatus of a communication counterpart, and supply the generated data to the transfer unit.

11. The wireless apparatus according to claim 10, wherein the transfer unit is configured to perform the transfer by using a hyper frame constituted by a predetermined number of basic frames of the predetermined interface as a unit.

12. The wireless apparatus according to claim 10, wherein the transfer unit is configured to perform the transfer by using a basic frame of the predetermined interface as a unit.

13. The wireless apparatus according to claim 10, wherein the transfer unit is configured to perform the transfer by separating data of a plurality of destinations multiplexed in a basic frame of the predetermined interface and multiplexing the data on a destination by destination basis.

14. A wireless apparatus control apparatus in a mobile communication system in which a cell is constituted by connecting the wireless apparatus control apparatus and a wireless apparatus that are included in a wireless base station by using a predetermined interface,
the wireless apparatus control apparatus comprising:
a plurality of interfaces that include the predetermined interface connected to each of a plurality of the wireless apparatuses of an own cell;
a storage unit in which at least a destination node address, an address of a node connected in a stage subsequent to an own node, and a number of nodes that are gone through are registered on a node by node basis;
a transfer unit configured to determine a destination of a received data communication and, when the determined destination is not an own apparatus, refer to the storage unit based on the determined destination, and perform a transfer to the determined destination by transmitting data of the received data communication via any one of the plurality of interfaces; and
a control unit configured to, when the destination determined by the transfer unit is the own apparatus, terminate the data of the received data communication supplied from the transfer unit, generate data of a data communication to be transmitted to the wireless apparatus control apparatus or the wireless apparatus of a communication counterpart, and supply the generated data to the transfer unit.

15. The wireless apparatus control apparatus according to claim 14, wherein the transfer unit is configured to perform the transfer by using a hyper frame constituted by a predetermined number of basic frames of the predetermined interface as a unit.

16. The wireless apparatus control apparatus according to claim 14, wherein the transfer unit is configured to perform the transfer by using a basic frame of the predetermined interface as a unit.

17. The wireless apparatus control apparatus according to claim 14, wherein the transfer unit is configured to perform the transfer by separating data of a plurality of destinations multiplexed in a basic frame of the predetermined interface and multiplexing the data on a destination by destination basis.
